# EUROPEAN PATENT APPLICATION

(11) **EP 1 808 972 A2**
(43) Date of publication of application: **18.07.2007**
(21) Application number: 07075015.3
(22) Date of filing: 09.01.2007
(51) Int. Cl.: H04H 1/00

(54) **Satellite digital audio radio receiver with playback capability**

(30) Priority: 17.01.2006 US 333585
(71) Applicant: Delphi Technologies, Inc., Troy, Michigan 48007 (US)
(72) Inventor: Walker, Glenn A., Greentown, IN 46936 (US); Dockemeyer, Joseph R., Jr., Kokomo, IN 46901 (US)
(74) Representative: Denton, Michael John

(57) **Abstract**

A technique for recording information received by a satellite digital audio radio (SDAR) receiver for playback encrypts content of a received SDAR channel using a local key that is unique to the SDAR receiver. The encrypted content is then stored for playback. When selected for playback, the stored encrypted content is decrypted with the local key and provided to the user.

## Description

### Technical Field

The present invention is generally directed to a satellite digital audio radio receiver and, more specifically, to a satellite digital audio radio receiver with playback capability.

### Background of the Invention

Satellite digital audio radio service (SDARS) is a relatively new satellite-based service that broadcasts audio entertainment to fixed and mobile receivers within the continental United States and various other parts of the world. Within an SDARS system, satellite-based transmissions provide the primary means of communication. Today, Sirius satellite radio and XM satellite radio are two SDARS systems that are utilized to provide satellite-based services. These SDARS systems may provide separate channels of music, news, sports, ethnic, children's and talk entertainment on a subscription-based service and may provide other services, such as email and data delivery.

In these SDARS systems, program material is transmitted from a ground station to satellites in geostationary or geosynchronous orbit over the continental United States. The satellites retransmit the program material to earth-based satellite digital audio radio (SDAR) receivers. In general, due to piracy concerns, the recording industry is opposed to allowing individuals to copy digital content, received via an SDAR receiver, for playback.

What is needed is a technique that allows for the playback of satellite digital audio radio content while addressing piracy concerns.

### Summary of the Invention

The present invention is generally directed to a technique for recording information received by a satellite digital audio radio (SDAR) receiver for playback. According to the technique, content of a received SDAR channel is encrypted using a local key that is unique to the SDAR receiver. The encrypted content is stored for playback. When selected for play, the stored encrypted content is decrypted with the local key and provided to the user. According to another aspect, the number of times that the decrypted content is provided to the user is limited. According to a different embodiment, a permission key is provided in the content of the SDAR channel. The permission key indicates whether the content of the SDAR channel can be stored. According to this embodiment, storage of the content is blocked when the permission key indicates that the content of the SDAR channel is not permitted to be stored.

According to another aspect of the invention, the encrypted content, which includes at least one of audio and video, is stored within a portable device. The portable device may be one of a memory stick, a flash drive, a jump drive, a smart card, a hard disk drive, an RW-CD drive and an RW-DVD drive. According to a different embodiment, the local key is provided to the SDAR receiver in a wireless message that is sent from a service provider.

These and other features, advantages and objects of the present invention will be further understood and appreciated by those skilled in the art by reference to the following specification, claims and appended drawings.

### Brief Description of the Drawings

The present invention will now be described, by way of example, with reference to the accompanying drawings, in which:
Fig. 1 depicts an exemplary electrical block diagram of an audio system implemented within a motor vehicle;
Fig. 2 depicts an exemplary electrical block diagram of a satellite digital audio radio (SDAR) receiver; and
Fig. 3 depicts an exemplary flow-chart diagram of a routine for enabling secure playback of content received from an SDAR system.

### Description of the Preferred Embodiments

Today, satellite digital audio radio service (SDARS) and other pay services have expanded their ability to provide digital content (audio and/or video) to various consumers. As with systems such as TiVo™, the ability to record a digital program, while listening to or watching another digital program, has increasingly been in higher demand. However, allowing digital content to be recorded and played back may subject the digital content to theft. According to various embodiments of the present invention, a local encryption technique is utilized to re-encrypt received digital content, e.g., audio and/or video, such that only a specific receiver can utilize the digital content. Specifically, according to one aspect of the present invention, a unique local key (contained within each receiver) is implemented to provide a secure record/playback capability.

According to another aspect of the present invention, the digital content may include one or more permission keys that indicate whether the digital content may be stored for later playback. The digital content may also include information, which limits the number of times that the encrypted digital content may be provided to a user of the system. It should be appreciated that a wide variety of portable devices may be implemented for storing the received encrypted digital content. For example, the portable device may include a memory stick, flash drive, jump drive, smart card, hard drive, an RW-CD drive, an RW-DVD drive, etc.

According to a different aspect of the present invention, a receiver may receive a unique key from a service provider in a message provided directly from the service provider. This, in turn, allows multiple receivers to share recorded data. It should also be appreciated that the digital content may be provided by service providers other than satellite digital audio radio service (SDARS) providers. For example, the digital content may be sent via the Internet or through a data channel that is different than an actual service channel. This, in turn, allows a higher level service to include the ability to create a play list using a large database of music/video that is archived by a service provider. As the digital content can only be utilized by a specific receiver, piracy concerns, voiced by the recording industry, are addressed.

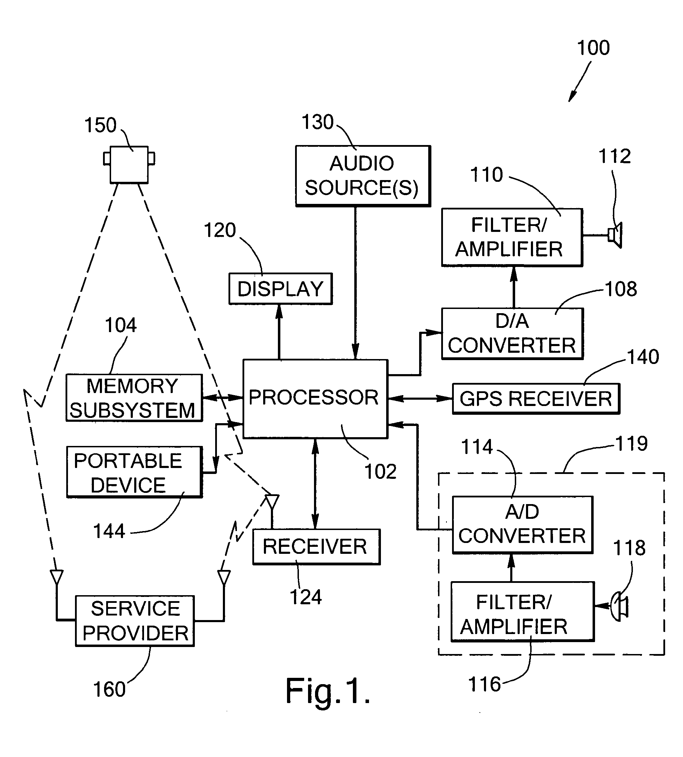

Fig. 1 depicts a block diagram of an exemplary audio system 100 that may be implemented within a motor vehicle (not shown). As shown, the system 100 includes a processor 102 coupled to a satellite digital audio radio (SDAR) receiver 124 and an audio source 130, e.g., including a compact disk (CD) player, a digital versatile disk (DVD) player, a cassette tape player an MP3 file player, and a display 120. The processor 102 may control the receiver 124 and the audio source(s) 130, at least in part, as dictated by manual or voice input supplied by a user of the system 100. In audio systems that include voice recognition technology, different users can be distinguished from each other by, for example, a voice input or a manual input.

The receiver 124 may receive multiple SDAR channels, which are provided by satellite 150, simultaneously. The receiver 124 may also communicate with a service provider transceiver 160. For example, a service provider may provide a local key, used to encrypt content to be stored, to the receiver 124 in a message sent via the transceiver 160. The encrypted content may be stored in portable device 144, which may be, for example, a memory stick, a flash drive, a jump drive, a smart drive, a hard disk drive an RW-CD drive, an RW-DVD drive, etc., for playback at a later time.

The processor 102 controls audio provided to a user, via audio output device 112, and may also supply various video information to the user, via the display 120. As used herein, the term processor may include a general purpose processor, a microcontroller (i.e., an execution unit with memory, etc., integrated within a single integrated circuit), an application specific integrated circuit (ASIC), a programmable logic device (PLD) or a digital signal processor (DSP). The processor 102 is also coupled to a memory subsystem 104, which includes an application appropriate amount of memory (e.g., volatile and non-volatile memory), which may provide storage for one or more speech recognition applications.

As is also shown in Fig. 1, an audio input device 118 (e.g., a microphone) is coupled to a filter/amplifier module 116. The filter/amplifier module 116 filters and amplifies the voice input provided by a user through the audio input device 118. The filter/amplifier module 116 is also coupled to an analog-to-digital (A/D) converter 114, which digitizes the voice input from the user and supplies the digitized voice to the processor 102 which may execute a speech recognition application, which causes the voice input to be compared to system recognized commands or may be used to identify a specific user. In general, the audio input device 118, the filter/amplifier module 116 and the A/D converter 114 form a voice input circuit 119.

The processor 102 may execute various routines in determining whether the voice input corresponds to a system recognized command and/or a specific operator. The processor 102 may also cause an appropriate voice output to be provided to the user through the audio output device 112. The synthesized voice output is provided by the processor 102 to a digital-to-analog (D/A) converter 108. The D/A converter 108 is coupled to a filter/amplifier section 110, which amplifies and filters the analog voice output. The amplified and filtered voice output is then provided to the audio output device (e.g., a speaker) 112. The processor 102 may also be coupled to a global position system (GPS) receiver 140, which allows the system 100 to determine the location of the receiver 140 and its associated motor vehicle.

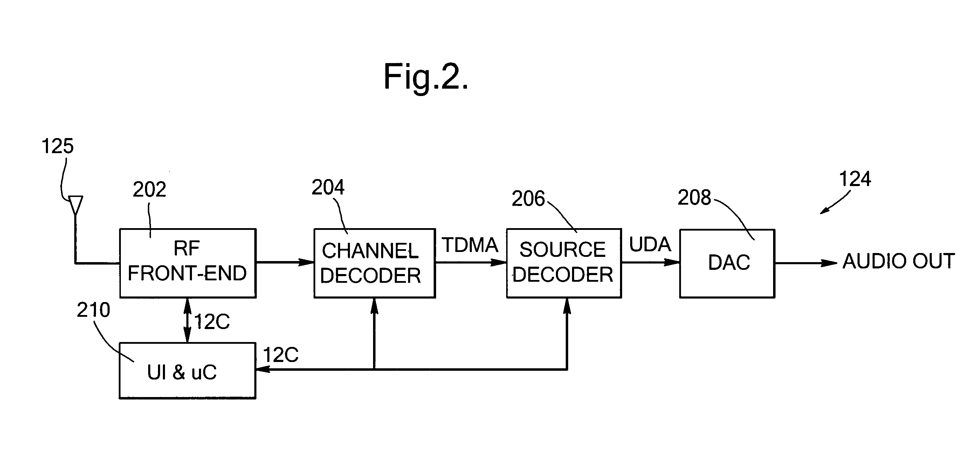

Fig. 2 depicts a block diagram of a typical commercially available satellite digital audio radio receiver that may be implemented as the receiver 124. As is illustrated in Fig. 2, an antenna 125 is coupled to an input of an RF front-end 202, whose output is coupled to an input of a channel decoder 204. The RF front-end 202 is also coupled to a microcontroller and user interface 210, via an inter-integrated circuit (l²C) bus. An output of the channel decoder 204 is provided to an input of a source decoder 206, which performs decryption and provides at its output an uncompressed digital audio. The output of the source decoder 206 is coupled to a digital-to-analog converter (DAC) 208, which provides an analog audio signal at its output. As is shown in Fig. 2, the microcontroller and user interface 210 are also are also coupled, via an l²C bus, to the channel decoder 204 and the source decoder 206.

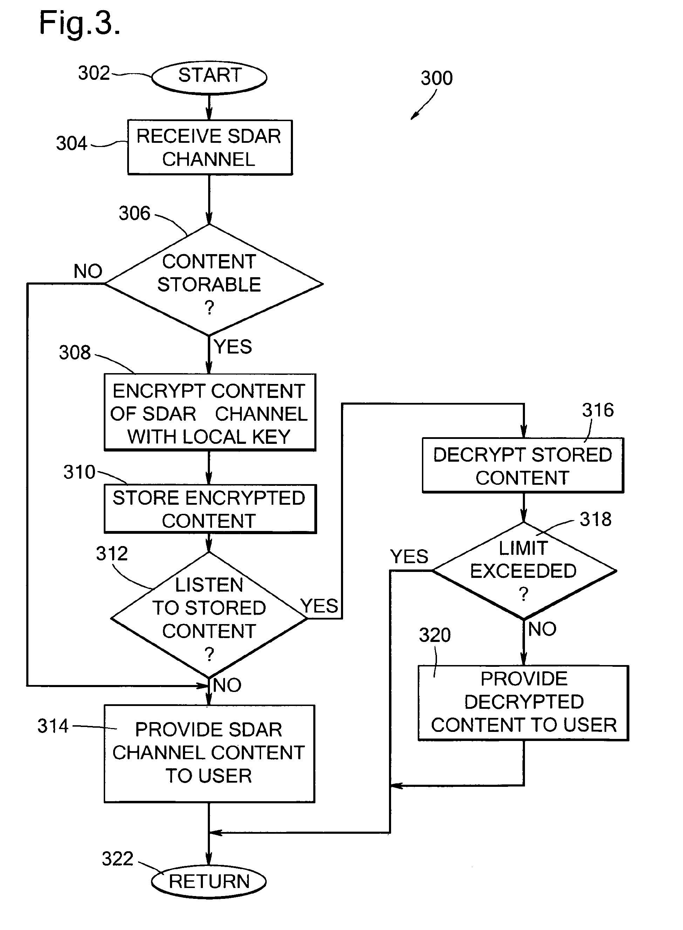

As is shown in Fig. 3, a playback routine 300 is depicted that allows digital content to be securely stored for later playback. In step 302, the routine 300 is initiated, at which point control transfers to step 304, where the receiver 124 receives one or more SDAR channels. In decision step 306, when a user has selected to store the received content, the routine 300 determines whether the content is storable. This may be determined, for example, when the processor 102 examines a permission key that is provided in the content of the SDAR channel. When the permission key indicates that the content of the SDAR channel can be stored, the processor 102 then allows storage of the digital content on, for example, media contained in the portable device 144.

However, when the permission key indicates that storage of the SDAR channel is not allowed, the processor 102 prevents storage of the digital content on the media contained in the portable device 144. When the digital content is storable, control transfers from step 306 to step 308, where the content of the SDAR channel is encrypted with a local key that is specific to the receiver 124. Next, in step 310, the encrypted content is stored, by the processor 102, on the media contained in the portable device 144. Then, in decision step 312, the processor 102 determines whether the user of the system desires to listen to stored content. If so, control transfers from step 312 to step 316. Otherwise, control transfers to step 314. When the content is not storable in step 306, control transfers to step 314. In step 314, the content of a current SDAR channel is provided to a user, before transferring control to step 322, where the routine 300 returns to a calling routine.

In step 312, when a user desires to listen to stored content, control transfers to step 316, where the stored content is retrieved, from the media of the portable device 144, and decrypted. Next, in decision step 318, the processor 102 determines whether the play limit for the stored digital content has been exceeded. If so, control transfers to step 322. Otherwise, control transfers from step 318 to step 320, where the processor 102 causes the encrypted content to be provided to a user (via display 120 and/or speaker 112) before return to the calling routine in step 322.

Accordingly, a routine has been described, which allows for the secure storage of digital content provided by various systems, such as a satellite digital audio radio service (SDARS) system.

The above description is considered that of the preferred embodiments only. Modifications of the invention will occur to those skilled in the art and to those who make or use the invention. Therefore, it is understood that the embodiments shown in the drawings and described above are merely for illustrative purposes and not intended to limit the scope of the invention, which is defined by the following claims as interpreted according to the principles of patent law, including the doctrine of equivalents.

## Claims

1. A method for recording information received by a satellite digital audio radio (SDAR) receiver for playback, comprising the steps of:
receiving an SDAR channel;
encrypting content of the SDAR channel using a local key that is unique to the SDAR receiver;
storing the encrypted content from the SDAR channel;
decrypting the stored encrypted content with the local key; and
selectively providing the decrypted content to the user.

2. The method of claim 1, further comprising the step of:
limiting the number of times that the decrypted content from the SDAR channel is provided to the user.

3. The method of claim 1, further comprising the step of:
providing a permission key in the content of the SDAR channel, wherein the permission key indicates whether the content of the SDAR channel can be stored; and
preventing storage of the content of the SDAR channel when the permission key indicates that the content of the SDAR channel is not permitted to be stored.

4. The method of claim 1, wherein the encrypted content of the SDAR channel is stored within a portable device, and wherein the content includes at least one of audio and video.

5. The method of claim 4, wherein the portable device includes one of a memory stick, a flash drive, a jump drive, a smart card, a hard disk drive, an RW-CD drive and an RW-DVD drive.

6. The method of claim 1, wherein the local key is provided to the SDAR receiver in a wireless message that is sent from a service provider.

7. A method for recording information received by a satellite digital audio radio (SDAR) receiver for playback, comprising the steps of:
receiving a first and second SDAR channel;
providing content of the first SDAR channel to a user;
encrypting content of the second SDAR channel using a local key that is unique to the SDAR receiver;
storing the encrypted content from the second SDAR channel;
decrypting the stored encrypted content from the second SDAR channel with the local key; and
providing the decrypted content from the second SDAR channel to the user.

8. The method of claim 7, further comprising the step of:
limiting the number of times that the decrypted content from the second SDAR channel is provided to the user.

9. The method of claim 7, further comprising the steps of:
providing a permission key in the content of the second SDAR channel, wherein the permission key indicates whether the content of the second SDAR channel can be stored; and
preventing storage of the content of the second SDAR channel when the permission key indicates that the content of the second SDAR channel is not permitted to be stored.

10. The method of claim 7, wherein the content of the second SDAR channel is stored within a portable device.

11. The method of claim 10, wherein the portable device includes one of a memory stick, a flash drive, a jump drive, a smart card, a hard disk drive, an RW-CD drive and an RW-DVD drive.

12. The method of claim 7, wherein the local key is provided to the SDAR receiver in a wireless message that is sent from a service provider.

13. The method of claim 7, wherein the second SDAR channel is provided to the SDAR receiver outside of a service provider channel bandwidth.

14. A method for recording information digital content for playback, comprising the steps of:
providing encrypted digital content to a receiver;
storing the encrypted digital content;
decrypting the stored encrypted digital content using a local key that is unique to the receiver; and
providing the decrypted digital content to the user.

15. The method of claim 14, further comprising the step of:
limiting the number of times that the decrypted digital content is provided to the user.

16. The method of claim 14, further comprising the steps of:
providing a permission key in the digital content, wherein the permission key indicates whether the content of the digital content can be stored; and
preventing storage of the digital content when the permission key indicates that the digital content is not permitted to be stored.

17. The method of claim 14, wherein the encrypted digital content is stored within a portable device.

18. The method of claim 17, wherein the portable device includes one of a memory stick, a flash drive, a jump drive, a smart card, a hard disk drive, an RW-CD drive and an RW-DVD drive.

19. The method of claim 14, wherein the local key is provided to the SDAR receiver in a wireless message that is sent from a service provider.

20. The method of claim 14, wherein the digital content is provided to the receiver via the Internet.

21. The method of claim 14, wherein the receiver is incorporated with one of a personal digital assistant (PDA) and a secured motion picture expert group 3 (MP3) player.

22. A system for recording information received by a satellite digital audio radio (SDAR) receiver for playback, comprising the steps of:
an SDAR receiver for receiving an SDAR channel;
a processor coupled to the SDAR receiver; and
a memory subsystem coupled to the processor, the memory subsystem storing code that when executed by the processor causes the processor to perform the steps of:
encrypting content of the SDAR channel using a local key that is unique to the SDAR receiver;
storing the encrypted content from the SDAR channel;
decrypting the stored encrypted content from the second SDAR channel with the local key; and
providing the decrypted content from the second SDAR channel to the user.

23. The system of claim 22, further comprising:
additional code stored within the memory subsystem that when executed by the processor instructs the processor to perform the step of:
limiting the number of times that the decrypted content from the SDAR channel is provided to the user.

24. The system of claim 22, further comprising:
additional code stored within the memory subsystem that when executed by the processor instructs the processor to perform the steps of:
receiving a permission key, wherein the permission key is included in the content and indicates whether the content of the SDAR channel can be stored; and
preventing storage of the content of the SDAR channel when the permission key indicates that the content of the SDAR channel is not permitted to be stored.

25. The system of claim 22, wherein the encrypted content of the SDAR channel is stored within a portable device.

26. The system of claim 25, wherein the portable device includes one of a memory stick, a flash drive, a jump drive, a smart card, a hard disk drive, an RW-CD drive and an RW-DVD drive.

27. The system of claim 22, wherein the local key is provided to the SDAR receiver in a wireless message that is sent from a service provider.
